# EUROPEAN PATENT APPLICATION

(11) **EP 1 367 518 A1**
(43) Date of publication of application: **03.12.2003**
(21) Application number: 02705079.8
(22) Date of filing: 05.03.2002
(51) Int. Cl.: G06F 17/60

(54) **ADVERTISEMENT DISTRIBUTION SYSTEM**

(30) Priority: 06.03.2001 JP 2001062676
(71) Applicant: MATSUSHITA ELECTRIC INDUSTRIAL CO., LTD., Kadoma-shi, Osaka 571-8501 (JP)
(72) Inventor: EMURA, Koichi, Yokohama-shi, Kanagawa 232-0072 (JP)
(74) Representative: Grünecker, Kinkeldey, Stockmair & Schwanhäusser Anwaltssozietät
(86) International application number: JP0202006
(87) International publication number: WO02071293

(57) **Abstract**

Space saving and effective distribution of advertisement data are achieved by using free storage spaces existing in client terminals to manage the advertisement data. To achieve this, data managed by the server is stored in free spaces of storage devices of the registered client terminals, and when data is transmitted and received through the server, the server retrieves advertisement data related to specific data from the storage device and attaches it to the specific data to be transmitted or received. Thereby, the server borrows free storage spaces of the client terminals at low rental fees to manage the management data, and thereby can reduce the capacity of storage devices provided in the server and achieve space saving and cost reduction. On the other hand, the clients receive a reward by lending free storage spaces to the server, and can perform communications at low costs by allocating the reward to communication charges.

## Description

### TECHNICAL FIELD

The present invention relates to a communication method, advertisement distribution system, data transmitting-receiving apparatus, and a medium thereof on networks such as the Internet. More specifically, the present invention relates to a communication method, advertisement distribution system, data transmitting-receiving apparatus, and a medium thereof by which specific data stored in a storage device of a client terminal is transmitted to another client terminal along with advertisement data over a network, and on the other hand, in the another client terminal, the specific data is stored in a storage medium and the advertisement data is displayed on a display screen.

### BACKGROUND ART

Recently, the Internet has become rapidly widespread, communication fees are becoming lower or being fixed, and always-on connection of the Internet is gradually spreading on a personal basis.

However, one impediment to always-on connection of the Internet is high communication charges, and a system allowing always-on connection with ease at lower communication charges is desired.

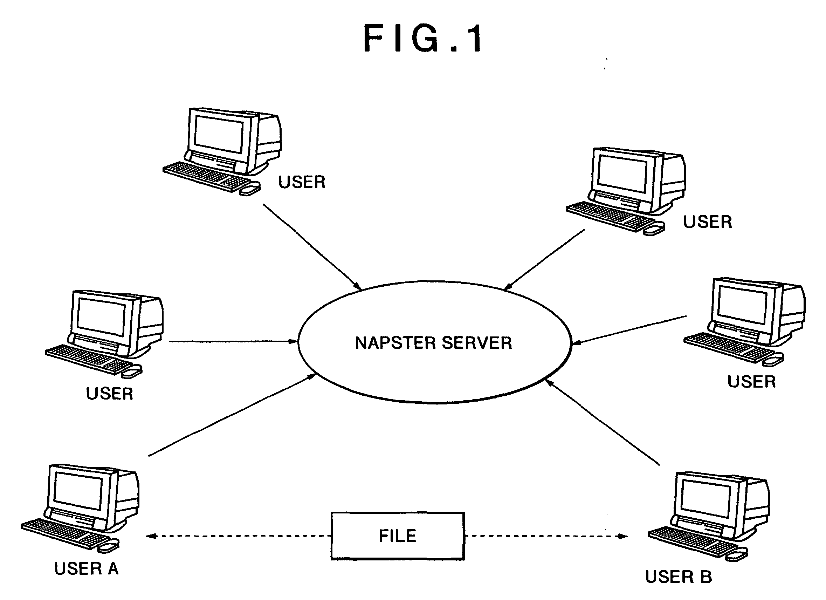

Moreover, there is an attempt to take advantage of the Internet to effectively use various types of data by exchanging them with people all over the world. A known example of it is sharing data by using software named Napster. Napster, developed by the U.S. Napster corporation, is software for users to share MP3 (MPEG Audio Layer 3) files and has a system as shown in FIG. 1. More specifically, users connected with a Napster server publicize their own music titles to the central Napster server. Information publicized here is artist name, title, file size, connection speed, owning user name (client terminal address information), sharing (exchange) condition, and the like. When the users (hereinafter referred to as clients) start up software named Napster, they are automatically connected to the central Napster server and can browse the publicized information. When the client A views the publicized information and finds that a client B owns a desired title, without passing through the central Napster server, the client A goes to a site indicated by address information, e.g., electronic mail address or URL (Uniform Resource Locator) of the client terminal publicized to the Napster server, to exchange the title directly with the client B. Therefore, the central Napster server is like a broker, and data is exchanged through another route, that is, directly between clients connected to the Internet at that time without using the management server. This method is also referred to as peer to peer. In the future, a system is expected to develop which is intended to exchange various types of data files through this kind of bulletin board, without being limited to such title exchange.

Today, since storage devices such as hard disk become large in capacity and are produced inexpensively, the capacity of hard disk of personal computers (hereinafter referred to as client terminals) owned by clients is also sufficient for use. Therefore, effective use of free storage space in each client terminal is conceivable.

### DISCLOSURE OF THE INVENTION

A first object of the present invention is to provide a communication method and advertisement distribution system capable of space saving, effective distribution of advertisement data, and reduction in communication charges by using free storage spaces existing in client terminals to manage the advertisement data.

A second object of the present invention is to provide an advertisement distribution system which can publicize more data, and a medium for executing the system.

The communication method of the present invention comprises: network connecting means; data transmitting-receiving means capable of transmitting and receiving data through a network; output means for outputting received data; plural client terminals having storing means for storing the data to be transmitted and received; and a server for managing connection of the client terminals to the network, wherein data managed by the server is stored in a free space of the storing means of the registered client terminals, and when specific data is transmitted and received directly between the client terminals without passing through the server, the client terminals retrieve the management data and attach the retrieved management data to the specific data to be transmitted or received. According to this arrangement, the server borrows free storage spaces of the client terminals at low rental fees to manage the advertisement data, and thereby can reduce the capacity of storage devices provided in the server and achieve space saving and cost reduction. Also, since storage devices are decentralized, access concentration from users can be prevented. On the other hand, the clients receive a reward by lending free storage spaces to the server, and can perform communications at low costs by allocating the reward to communication charges.

The advertisement distribution system of the present invention comprises: network connecting means; data transmitting-receiving means capable of transmitting and receiving data through a network; display means having a screen for displaying received data; and plural client terminals having storing means for storing the data to be transmitted and received, wherein the advertisement distribution system stores advertisement data and specific data in the storing means of the client terminals, and has control means, when a request to obtain the specific data is received from a specific client terminal, for attaching the advertisement data to the specific data and transmitting the specific data to the specific client terminal, and when the specific data attached with the advertisement data is received, for outputting the advertisement data to an output device and storing the specific data in the storing means . By this construction, specific data is transmitted to other client terminal along with attached advertisement data, and the other client terminal receives the specific data while viewing the advertisement data. Accordingly, if advertisement data related to the specific data is attached, more effective advertisement can be made. On the other hand, clients to provide specific data receive advertisement fees from sponsors as rewards for advertisement data included in the client terminals, and can not only reduce communication charges by allocating the rewards to the communication charges but also earn profits . As a result, more clients will publicize more data, providing a wider range of selection for use and much greater effects. Also, since storage devices are decentralized, access concentration from users can be prevented.

The advertisement distribution system of the present invention transmits and receives the specific data and the advertisement data through electronic mail. By this construction, since data is transmitted and received through file transfer, electronic mail, and streaming that are becoming widespread, data can be easily transmitted and received. The advertisement distribution system can also be achieved by direct file transfer between client terminals supplying the specific data and the advertisement data and receiving client terminals.

In the advertisement distribution system of the present invention, the network is an open network on which a central server is provided which publicizes the specific data stored in the data supplying client terminals along with the client terminal address information. By this construction, since open networks such as the Internet are used, anyone can access and use the central server with ease, so that the system can be expected to expand. Without providing the central server on the open network, over the open network, data supplying client terminals can send the specific data stored therein along with address information of the terminals.

In the advertisement distribution system of the present invention, transmission and reception of the data is managed by a server, the number of times the data was transmitted in response to a request from the specific client is counted by the server, the counted data is supplied to a sponsor of the advertisement data, and the sponsor pays an advertisement fee to the data supplying clients according to the counted data. By this construction, if specific data is requested from more clients and more specific data attached with advertisement data is distributed, rewards are obtained according to the amount of distribution. As a result, clients to provide data will publicize better data, providing a wider range of selection for use and much greater effects. Also, since storage devices are decentralized, access concentration from users can be prevented.

In this case, transmission and reception of the data is managed by clients, the number of times the data was transmitted in response to a request from the specific client is counted by the clients, the counted data is supplied to a sponsor of the advertisement data, and the sponsor pays an advertisement fee to the data supplying clients according to the counted data.

A medium of the present invention contains a program for commanding the client terminals to successively perform processing that, when a request to obtain specific data is received from a specific client terminal, attaches advertisement data to the specific data and transmits it to the specific client terminal, and processing that, when the specific data attached with the advertisement data is received, outputs the advertisement data to an output device and stores the specific data in storing means. By this construction, by distributing the medium to desiring clients, clients desiring participation can easily participate in the advertisement distribution system. Since storage devices are decentralized, access concentration from users can be prevented.

In the medium of the present invention, the program is designed so that transmission and reception of the data is performed by transmitting and receiving electronic mail of the client terminal. By this construction, the advertisement distribution system can be achieved using electronic mail.

As described above, according to the present invention, the server borrows free storage spaces of the client terminals at low rental fees to manage the advertisement data, and thereby can reduce the capacity of storage devices provided in the server. As a result, there can be provided a communication method having the excellent effect that space saving and cost reduction can be achieved. Also, since storage devices are decentralized, access concentration from users can be prevented. On the other hand, the clients receive a reward by lending free storage spaces to the server, and can perform communications at low costs by allocating the reward to communication charges.

Specific data is transmitted to other client terminals along with attached advertisement data, and the other client terminals receive the specific data while viewing the advertisement data. Therefore, if a sponsor of an advertisement related to the specific data is located and related advertisement data is attached, more effective advertisement can be made. On the other hand, clients to provide specific data receive advertisement fees from sponsors as rewards for advertisement data included in the client terminals, and can not only reduce communication charges by allocating the rewards to the communication charges but also earn profits. As a result, since more clients will publicize more data, an advertisement distribution system can be realized which provides a wider range of selection for use and much greater effects.

### BRIEF DESCRIPTION OF THE DRAWINGS

FIG. 1 illustrates a conventional communication system;
FIG. 2 is a diagram showing a configuration of an advertisement distribution system as a first embodiment of the present invention;
FIG. 3 illustrates a configuration of a client terminal in the first embodiment of the present invention;
FIG. 4 is a block diagram showing a configuration of ISP used in an advertisement distribution system according to a second embodiment of the present invention;
FIG. 5 is a block diagram showing a configuration of a client terminal used in an advertisement distribution system according to the second embodiment of the present invention;
FIG. 6 is a flowchart for explaining advertisement data lending operation in the second embodiment of the present invention;
FIG. 7 is a diagram showing the format of lending management data of advertisement data during advertisement data lending operation in the second embodiment of the present invention;
FIG. 8 is a flowchart for explaining data distribution operation in the second embodiment of the present invention;
FIG. 9 is a flowchart for explaining contents data storage operation in the second embodiment of the present invention;
FIG. 10 is a diagram showing the format of data distribution management data used in data distribution operation in the second embodiment of the present invention;
FIG. 11 is a flowchart for explaining report operation in the second embodiment of the present invention; and
FIG. 12 is a diagram showing the format of report management data used in report operation in the second embodiment of the present invention.

### BEST MODE FOR CARRYING OUT THE INVENTION

### (First embodiment)

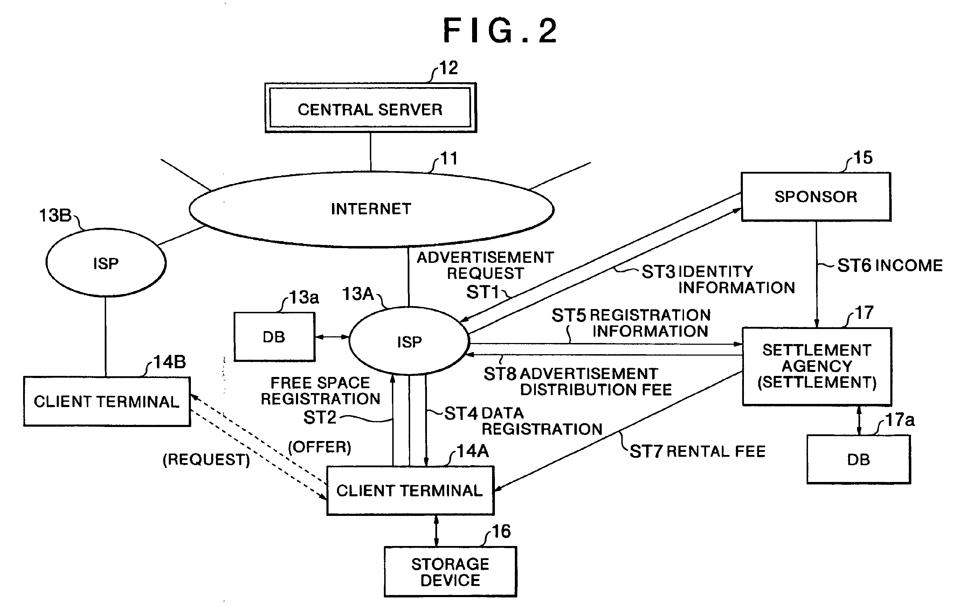

Hereinafter, a first embodiment of the present invention will be described using the accompanying drawings. FIG. 2 is a diagram showing a configuration of an advertisement distribution system shown as a first embodiment of the present invention. FIG. 2 shows an example of the advertisement distribution system developed on the Internet 11 built as an open network; on the Internet 11, a central server 12 exists on the Internet 11, and plural client terminals 14A, 14B, and so forth are connected through an Internet service provider 13 (hereinafter referred to as ISP) as a server.

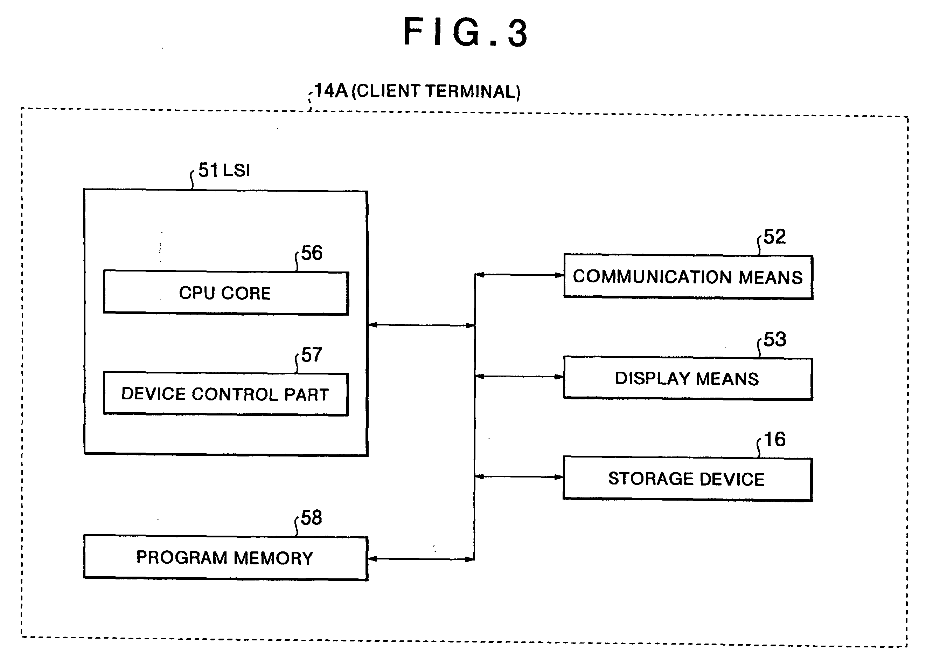

The client terminals 14A, 14B, and so forth are respectively personal computers. The client terminal 14A will be typified for description. The client terminal 14A of the first embodiment has a schematic configuration as shown in FIG. 3. More specifically, the client terminal 14A comprises: LSI 151 including CPU core 56, and device control part 57 for controlling peripheral devices; communication means 52 having the function of network connecting means for making connection to networks such as the Internet, and the function of data transmitting-receiving means capable of transmitting and receiving data through networks; data output means 53 for outputting received data and the like; storage device 16 constituted of high capacity hard disk, DVD (digital video disk), and the like for storing data transmitted and received; and program memory 58 storing basic programs of the client terminal 14A. The data output means 53 has a display part for outputting images and a loudspeaker for outputting sounds.

When dedicated software (recording medium) having a program provided by the central server 12, which is like the above described "Napster", is downloaded into program memories 58 of the client terminals 14A, 14B, and so forth, and the dedicated program software is started, the client terminals are automatically connected to the central server 12. The central server 12 is provided with a bulletin board for publicizing data (hereinafter referred to as specific data) owned by the client terminals. The following data is written to the bulletin board and publicized: a data name, a data size, a connection speed, the name of owning user (client terminal address information), sharing (exchange) condition, and the like. The sharing conditions may include free and chargeable transfers in addition to exchange. Although any clients having the dedicated software can write to and browse the bulletin board, the following description, for the sake of simplicity, assumes a case where a client having the client terminal 14A registers providable specific data in the bulletin board and the client terminal 14B wishes to exchange with the specific data of the client terminal 14A. Symbols ST1 to ST8 in FIG. 2 indicate the order of a processing flow, the client terminal 14A is always connected to ISP 13A, and the client terminal 14B is always connected to ISP 13B.

The ISP 13A used by the client terminal 14A has a database (DB) 13a and holds advertisement publishing contracts with various sponsors 15 (ST1). The ISP 13A rents part of free space of storage device 16 provided in the client terminal 14A that approves of distribution of advertisements from the sponsors 15 and can use the rented space as a place for storing advertisement data. More specifically, if the storage device 16 (hereinafter referred to as rental storage device 16) of the client terminal 14A to be rented is decided, the ISP 13A stores data (hereinafter referred to as advertisement data) requested to advertise from the sponsors in a free space of the rented storage device 16. When the client terminal 14A sends or receives specific data in response to a request from the client terminal 14B, the client terminal 14A retrieves advertisement data corresponding to the specific data from the rental storage device 16 and attaches or binds the advertisement data to the specific data to transmit the specific data to the client terminal 14B.

The above described specific data refers to so-called contents data such as music and image. When the client terminal 14B to which the dedicated software is incorporated receives contents data to which the advertisement data is attached, the advertisement data is first received and opened, the advertisement data is outputted to the data output means 53 of the client terminal 14B, and then the contents data is received. The advertisement data is displayed on a screen of WWW browser if the data is exchanged on home pages using the WWW browser, within a mail screen if electronic mail software is used, and outputted from a loudspeaker in the case of audio data. Accordingly, in this embodiment, when contents data to which advertisement data is attached is received, the client terminal 14B views or hears the attached advertisement data without fail, and the attached advertisement data is not an advertisement independent of the contents data but is an advertisement corresponding to the contents data. Therefore, advertisement effects are increased. As a method for selecting an advertisement corresponding to contents data, for example, keyword within the contents data is extracted and advertisement data corresponding to the keyword is selected. Since users sharing contents data (group) automatically creates a community, advertisements suitable for a targeted community can be selected by analyzing shared data and preference information of specific users. ISP as an access provider and ISP as an advertisement intermediary agent may be identical or different.

The client terminal 14A having the rental storage device 16 is made available by the following method. Knowing advertisement invitation by ISP 13A, the client registers a free space (capacity) of memory available for advertisement distribution in the storage device 16 of the client terminal 14A in the ISP 13A (ST2). The ISP 13A examines the directory of the client terminal 14A and registration items, and provides identity information of the client terminal 14A to the sponsor 15 if conditions are satisfied (ST3). If an approval is given from the sponsor 15 as a result of examining the identity information, the ISP 13A informs the client that the rental storage device 16 of the client terminal 14A is used, and then the ISP 13A stores advertisement data in the rental storage device 16 (ST4) . In this system, a settlement agency 17 having a database 17a is provided in advance to arrange payment amounts of advertisement distribution among the ISP 13A, sponsor 15, and client, and the payment amounts are registered in the settlement agency 17 as registration information (ST5). The settlement agency 17 receives payment of advertisement fees from the sponsor 15 according to the arrangement (ST6), pays rental fees to the client owning the rental storage device 16 (ST7), and pays advertisement distribution fees to the ISP 13A (ST8).

Therefore, in the system of this embodiment, the server (ISP 13A) borrows a free storage space (rental storage device 16) of the client terminal 14A at low rental fees to manage advertisement data, and thereby can reduce the capacity of a storage device provided in the server and achieve space saving and cost reduction. On the other hand, the client receive a reward by lending a free storage space to the server, and can perform communications at low costs by allocating the reward to communication charges.

The foregoing description is on a case where the ISP 13a borrows a free space of the storage device 16 of the client terminal 14A and stores advertisement data in the rental storage device 16 to retrieve and attach it to contents data when needed. However, the client terminals 14A and 14B incorporating the dedicated program software can perform processing as described in the following embodiment according to a processing procedure programmed in the dedicated program software.

### (Embodiment)

The client terminal 14A incorporating the dedicated program software, when transmitting contents data, automatically attaches advertisement data stored in the rental storage device 16 to contents data and sends it to the client terminal 14B. On the other hand, the client terminal 14B incorporating the dedicated program software like the client terminal 14A views the advertisement when receiving the contents data to which the advertisement data is attached. Advertisement data stored in the rental device 16 is sent in advance from the ISP 13A and stored, and periodically updated.

More specifically, the client terminal 14B obtains address information of the client terminal 14A from the bulletin board of the central server 12 and sends a request to exchange or transfer contents data directly to the client terminal 14A. The contents data is exchanged between the client terminal 14A and the client terminal 14B through the ISP 13B. At this time, advertisement data related to the contents data is automatically retrieved from the rental storage device 16 of the client terminal 14A, and attached to the contents data and transmitted to the client terminal 14B. When receiving the contents data and advertisement data, the client terminal 14B receives the contents data while viewing the advertisement data. Aside from the above operation, the contents data may be exchanged directly between the client terminal 14A and the client terminal 14B.

As a result, in this embodiment, when the client terminal 14A sends the contents data to the client terminal 14B, since the client terminal 14A itself attaches and sends the advertisement data in the rental storage device 16 stored in the client terminal 14A, it follows that the client terminal 14A has distributed the advertisement in place of the ISP 13A. Thereby, processing in the ISP 13A can be relaxed. As a method of paying a reward in this case, each transmission of contents data is reported to the ISP 13A, the counted data is passed to the sponsor 15 requesting advertisement data publication through the settlement agency 17, and the sponsor 15, aside from a rental fee, pays an advertisement fee to the client terminal 14A according to the counted data. If such a reward payment method is taken, it is conceivable that the clients positively publicize attractive data likely to be popular to earn more advertisement income. As a result, both the amount and quality of publicized advertisement data will increase and a wider range of use and selection of the advertisement data will bring about remarkable effects.

Although, in the above described embodiment, a description has been made of a case of development on the Internet, the present invention is also applicable to LAN (local area network) and the like without being limited to the Internet. Although a description has been made of a case of data transmission and reception by electronic mail, data may be exchanged on home pages of the Internet. Moreover, the storage device of the client terminal 14A may be installed in a place different from the client terminal 14A.

Without providing the central server 12 on the network, the data supplying client terminal 14a may send the contents data stored in the client terminal 14a to the network along with address information of the terminal.

The client terminal 14a itself may manage transmission and reception of the data, count the number of times the data was transmitted according to requests from other client terminals (e.g., 14b), and transmit the counted data to a sponsor of the advertisement data or the ISP 13A so that the sponsor pays an advertisement fee to the data providing client according to the counted data.

### (Second embodiment)

Hereinafter, a second embodiment of the present invention will be described using the accompanying drawings. In this embodiment, for convenience of description, of the client terminals 14A and 14B, the client terminal 14A is connected to the ISP 13A from which advertisement data can be lent and distributed to other client terminals (so-called advertisement distribution broker service can be performed) . The client terminal 14B is a terminal which is connected to the ISP 13B and receives distribution of contents data and advertisement data from terminals capable of broker service such as the client terminal 14A. Of course, the client terminal 14B can also perform broker service by issuing a advertisement lending request to the ISP 13B.

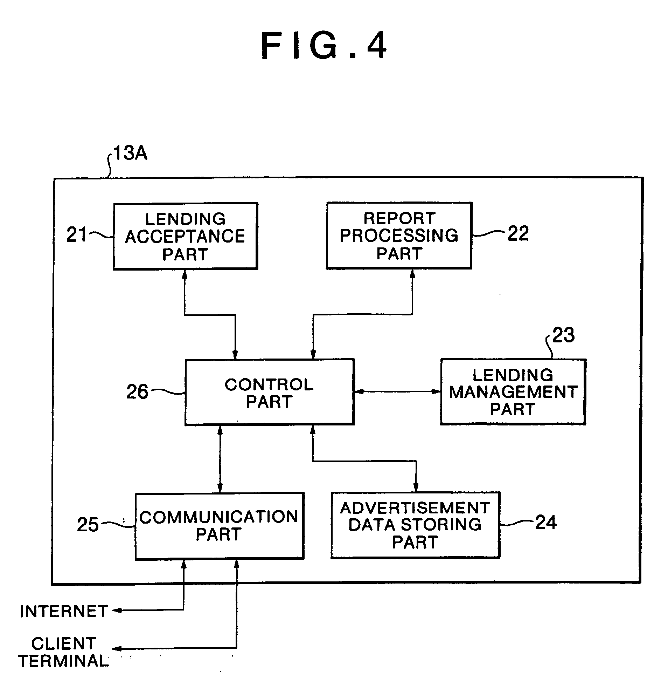

FIG. 4 is a block diagram showing the configuration of ISP 13A used in an advertisement distribution system according to the second embodiment. In FIG. 4, the ISP 13A comprises: a lending acceptance part 21 for accepting a lending offer from the client terminal 14A; a report processing part 22 for performing post-processing for a report on transmission of advertisement data from the client terminal 14A to the client terminal 14B; a lending management part 23 for managing the status of lent advertisement data; an advertisement data storing part 24 for storing rental advertisement data; a communication part for performing communications with the Internet 11 or client terminal 14; and a control part 26 for controlling various operations involved in the lending of advertisement data. By these function parts, lending acceptance for advertisement distribution and payment processing by actual advertisement distribution are performed. The lending acceptance part 21 accepts and registers an advertisement lending request from the client terminal 14A. The report processing part 22 performs reward payment and other processing upon receiving the report that the client terminal 14A receiving the lending of advertisement data sent the contents data to other client terminal 14B along with advertisement data. The ISP 13B connected to the client terminal 14B also has the same configuration.

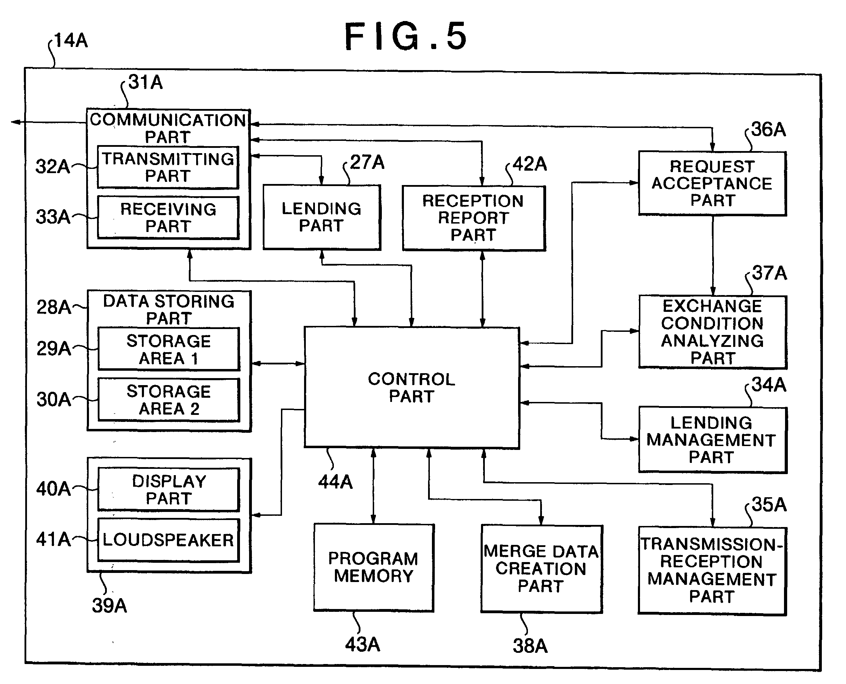

FIG. 5 is a block diagram showing the configuration of the client terminal 14A used in the advertisement distribution system according to the second embodiment. In FIG. 5, the client terminal 14A comprises: a lending part 27A for processing the offer that part of its own data storage area is used to store advertisement data; a data storing part 28A for storing own various data; and a communication part 31A that has a transmitting part 32A and a receiving part 33A and performs communications with the ISP 13A and data transmission and reception to and from it. The data storing part 28A is allocated within the storage device 16 in FIG. 3, and has a first storage area 29A for storing advertisement data and a second storage area 30A for storing contents data. The communication part 31A has a connection function for connecting the client terminal 14A to a network such as the Internet 11, the transmitting part 32A has a function for transmitting its own contents data and advertisement data to other client terminals, and a receiving part 33A has a function for receiving data from the ISP 13A or other client terminals. The receiving part 33A has a function for receiving data from the ISP 13A or other client terminals. The lending part 27A can be realized in the form of software by developing a lending program in the CPU core 56 within a block of the client terminal 14A shown in FIG. 3 from the program memory 58.

The client terminal 14A also includes: a lending management part 34A for managing lent advertisement data; a transmission-reception management part 35A for managing the status of data transmission and reception to and from other client terminals; a request acceptance part 36A for accepting contents data delivery requests from other client terminals; an exchange condition analyzing part 37A for analyzing an exchange condition indicating whether advertisement data may be attached during data transmission and reception to and from other client terminals; and a merge data creating part 38A for merging contents data and advertisement data if advertisement data may be attached.

Moreover, the client terminal 14A includes: a data output part 39A for outputting received data and the like; a reception report part 42A for reporting the reception of advertisement data to the ISP 13A when the advertisement data was received from other client terminals; program memory 43A storing basic programs of the client terminal 14A; and a control part 44A for controlling various transmission and reception operations in the client terminal 14A. The data output part 39A, which has the same function as the data output means 53 shown in FIG. 3, has a display part 40A and a loudspeaker 41A to output received advertisement data or contents data in the form of image or sound.

The client terminal 14B also has the same configuration as the client terminal 14A. Therefore, in the following description, identical reference numerals are added with "B" such as a data storing part 28B, a communication part 31B, a transmitting part 32B, a receiving part 33B.

With regard to the second embodiment having such configuration, system operations will be described below.

### (Advertisement data lending operation)

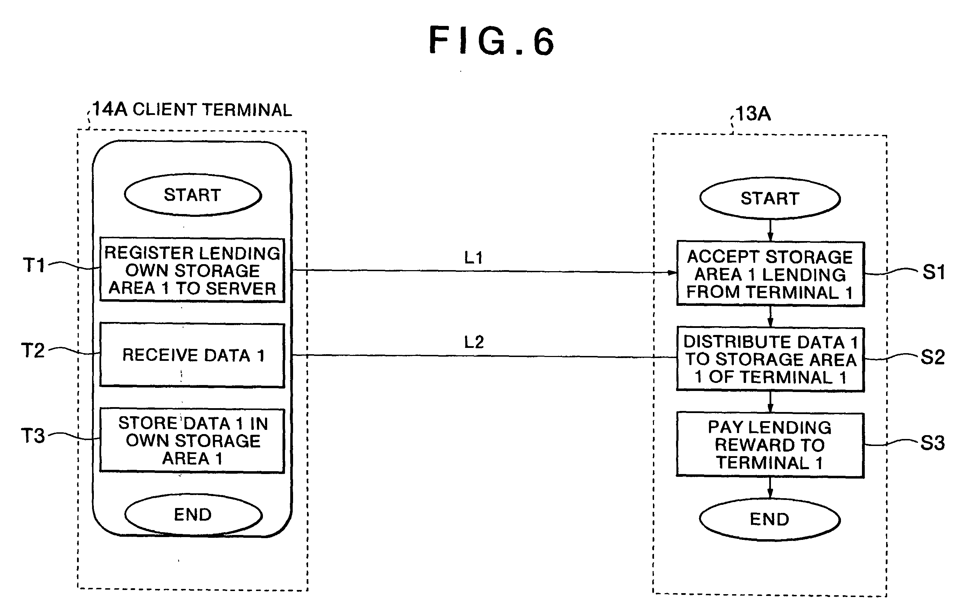

This operation is an operation on lending between the ISP 13A and the client terminal 14A. Concretely, this operation represents operation until the ISP 13A lends advertisement data to the client terminal 14A after the client terminal 14A makes an offer to provide a free area for storing advertisement data. FIG. 6 is a flowchart for explaining the lending operation.

When this processing operation is started, a request to lend and register a proper storage area (first storage area 29A) of its own storage device (hard disk) 16 is sent from the lending part 27A of the client terminal 14A to the lending acceptance part 21 of the ISP 13A (step T1). The lending registration request arrives in the lending acceptance part 21 of the ISP 13A as a communication line L1. Upon receiving the lending registration request, the lending acceptance part 21 accepts the lending registration request from the client terminal 14A registers the client and a first storage area 29A of the client (step S1). Next, the lending acceptance part 21 distributes advertisement data to storage area 1 of the client terminal 14A (step S2). The lending acceptance part 21 pays a lending reward to the client terminal 14A which has become a borrower of advertisement data managed by the ISP 13A (step S3). This reward corresponds to a reward for the fact that a user of the client terminal 14A has become a substitutive distribution broker or a sort of advertisement agency when viewed from the ISP 13A. The reward may be cash or be awarded in the form of coupon or other incentives. Advertisement data distributed from the lending acceptance part 21 arrives in the lending part 27A of the client terminal 14A as communication line L2. Upon receiving the advertisement data, the lending part 27A of the client terminal 14A receives the advertisement data (step T2) and stores it in the first storage area 29A of its own storage device 16 (step T3). In flowcharts of FIG. 6 and following drawings, advertisement data is represented as data 1. The above operations complete the advertisement data lending operation and cause advertisement data desired by the user to be stored in the first storage area 29A of the client terminal 14A.

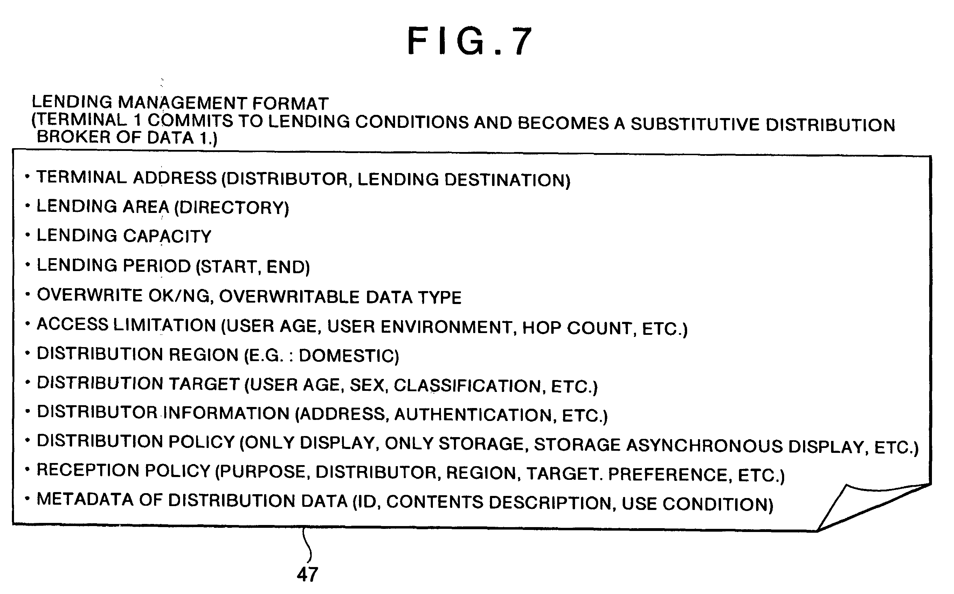

FIG. 7 is a diagram showing the format of lending management data of advertisement data during the above advertisement data lending operation. The lending management data 47 includes various data items set as described below.
(1) Terminal address: The address of the distributing ISP 13A and the address of the client terminal 14A as a lending destination are set.
(2) Lending area: This consists of directory data pointing to the first storage area 29A in the client terminal 14A.
(3) Lending capacity: This indicates the capacity (e.g., 10MB, etc.) of the first storage area 29A in the client terminal 14A. This serves as a criterion for determining whether advertisement data can be distributed.
(4) Lending period: This indicates a lending period of advertisement data to be distributed. Data such as lending start and end dates is set.
(5) Overwrite OK/NG, overwritable data type: This is data indicating whether advertisement data newly distributed may overwrite existing advertisement data when continuous advertisement data is distributed. The continuous advertisement data refers to advertisement data of advertisements for which stories are created and which are updated every month according to the stories.
(6) Access limitation: This defines limitations on users who receive advertisements from the client terminal 14A. The limitations include, e.g., user age (for children, for adults, etc.), sex, user environment (differences among models of personal computer, cellular phones, and digital home appliances), and hop count (the number of levels of subordinate client terminals to which advertisements may be distributed from the client terminal 14A).
(7) Distribution region: This defines regions of advertisement distribution by the client terminal 14A. Examples include regions such as the whole Japan, Kanto, and Kansai.
(8) Distribution target: This defines users whom advertisements should be positively distributed from the client terminal 14A. This target includes user age (for children, for adults, etc.), sex, and other classification items.
(9) Distributor information: This is data specifying the contents of a distributor that sent advertisements. This data includes address, name, and data indicating whether a specified advertisement was successfully sent. Advertisement data of sponsors is also included.
(10) Distribution policy: This is data specifying types and levels of treatment requests of advertisement data from a distributor. For example, data is included which indicates that the advertisement data may be only displayed or stored in a receiving side, or may be asynchronously displayed after being stored.
(11) Reception policy: This is data on distribution possibilities different depending on the situation of a receiving side. By making classification by, e.g., the purpose of reception, distributor, distribution region, target, preference, and the like, corresponding receivers can receive distribution of advertisements.
(12) Meta-data of distribution data: This includes data such as ID of advertisement data, contents description, use conditions, and the like.

When the advertisement data lending operation is performed, lending management data as described above is created and transmitted to the client terminal 14A along with advertisement data.

### (Data distribution operation)

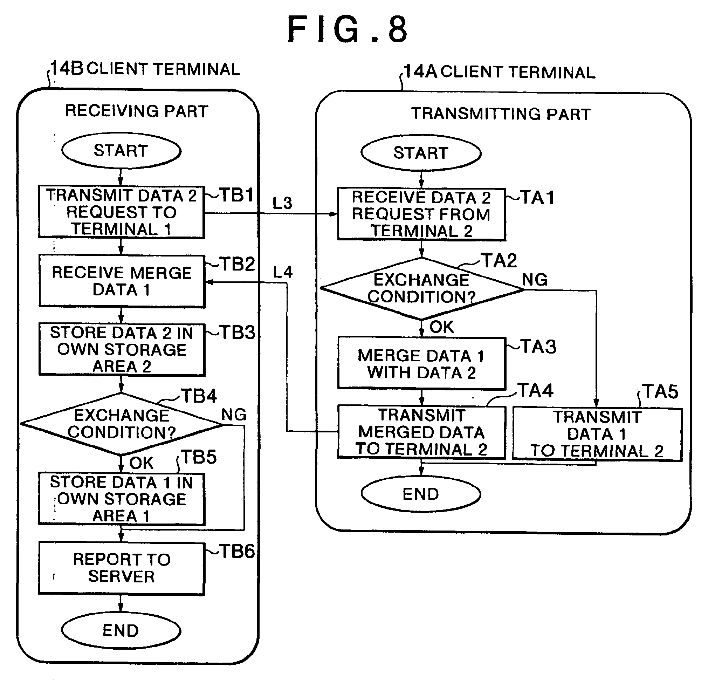

This operation is distribution operation of contents data and advertisement data between the client terminal 14A and client terminal 14B. FIG. 8 is a flowchart for explaining the above described data distribution operation.

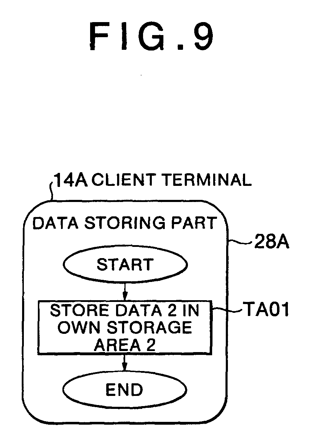

Before the processing operation is started, in the client terminal 14A, various contents such as music and image collected or edited by a user of the client terminal 14A are prepared. The contents data is stored in a second storage area 30A of the data storing part 28A as shown in a flowchart of FIG. 9 (step TA01). In flowcharts of FIG. 8 and following drawings, contents data is represented as data 2.

When data distribution operation is started, a contents data distribution request is transmitted from the receiving part 26B of the client terminal 14B to the transmitting part 32A of the client terminal 14A (step TB1). At this time, from the client terminal 14B, its own attribute information as well as the contents data distribution request may be transmitted. The attribute information includes the model, function, setting conditions (memory capacity, and whether advertisement data can be received or not), and current advertisement data reception and storage statuses of the client terminal 14B, and the age, sex, preference, and other information of the user. The lending registration request arrives in the lending acceptance part 21 of the ISP 13A as the communication line L1.

The transmitting part 32A receives the contents data distribution request (step TA1) and checks an exchange condition indicating whether advertisement data can be attached to the contents data, based on the received contents data distribution request (step TA2). If it is found as a result of checking the exchange condition that the exchange is possible, the communication part 32A merges (integrates) the contents data with advertisement data (step TA3), and transmits the merged data to the receiving part 26B of the client terminal 14B (step TA4). Specific merging methods include archiving by ZIP for file transfer, multipart creation by MIME for electronic mail, and multistream creation for streaming. On the other hand, if it is found as a result of checking the exchange condition in the step TA2 that the exchange is impossible, the transmitting part 32A transmits only the contents data to the receiving part 26B of the client terminal 14B without merging the contents data with the advertisement data (step TA5), and terminates a series of data distribution operations (data transmission operation to the client terminal 14A). The merged data or contents data arrives in the receiving part 26B of the client terminal 14B as communication line L4.

In the client terminal 14B, the receiving part 26B receives the merged data or contents data (step TB2), and stores the contents data in the second storage area 30A of its own storage device 16 (step TB3). The receiving part 26B checks an exchange condition indicating whether the advertisement data may be stored from the received data (step TB4). If it is found as a result of checking the exchange condition that the advertisement data may be stored, the receiving part 26B stores the advertisement data in the first storage area 29A of its own storage device 16 (step TB5). The receiving part 26B reports to the ISP 13A that the advertisement data was received from the client terminal 14A (step TB5), and terminates a series of data distribution operations (data receiving operation to the client terminal 14B).

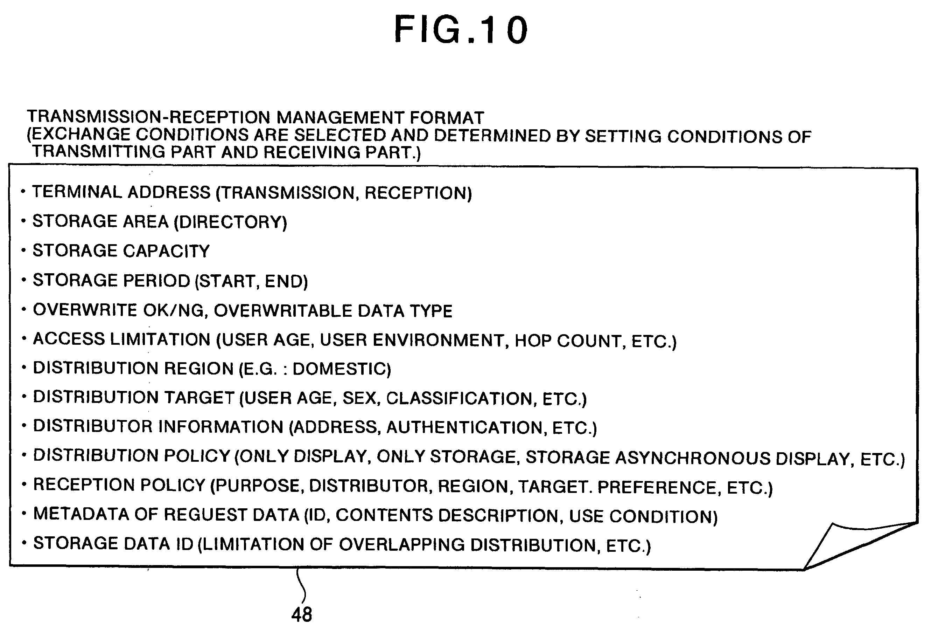

FIG. 10 shows the format of transmission-reception management data used in the data distribution operation. The transmission-reception management data 48 and the lending management data 47 shown in FIG. 7 have substantially the same data structure except the expressive differences that "lending area" of the latter corresponds to "storage area" of the former, "lending capacity" of the latter to "storage capacity" of the former, and "lending period" of the latter to "storage period" of the former. "Storage data ID" in the transmission-reception management data 48 is data for indicating the ID of advertisement data already stored in the client terminal 14B. This data is data for preventing the same advertisement data from being transmitted duplicately from the client terminal 14A to the client terminal 14B.

### (Report operation)

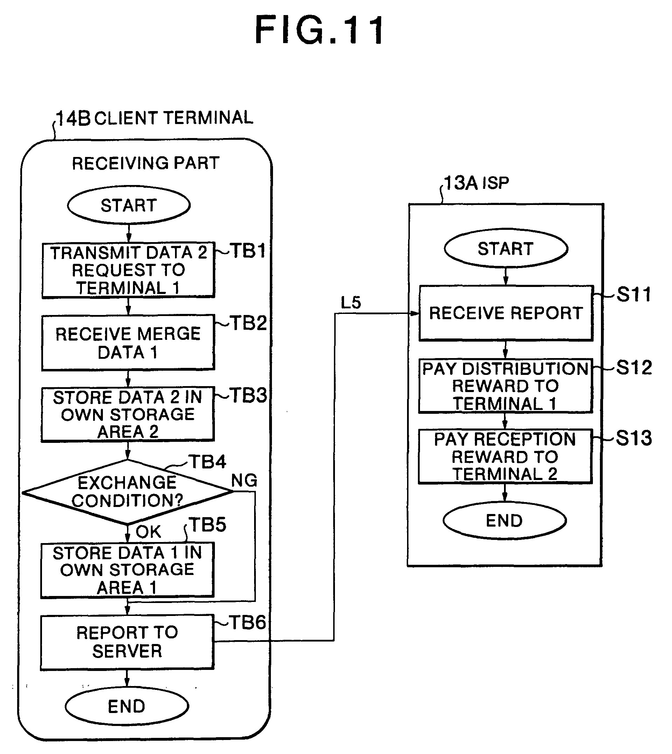

This operation is an operation for reporting from the client terminal 14B to the ISP 13A that advertisement data was received from the client terminal 14A. FIG. 11 is a flowchart for explaining the report operation.

This processing operation is performed continuously with the data distribution operation. When reception of advertisement data from the client terminal 14A is reported from the receiving part 26B of the client terminal 14B to the ISP 13A (step TB6), report data arrives in the report processing part 22 of the ISP 13A as communication line L5. Upon receiving the report data (step S11), the report processing part 22 pays a distribution reward to the client terminal 14A which has distributed advertisement data managed by the ISP 13A to the client terminal 14B (step S12). Next, the report processing part 22 also pays a reception reward to the client terminal 14B which has received and viewed advertisement data managed by the ISP 13A (step S13). The rewards may be cash or be awarded in the form of coupon or other incentives.

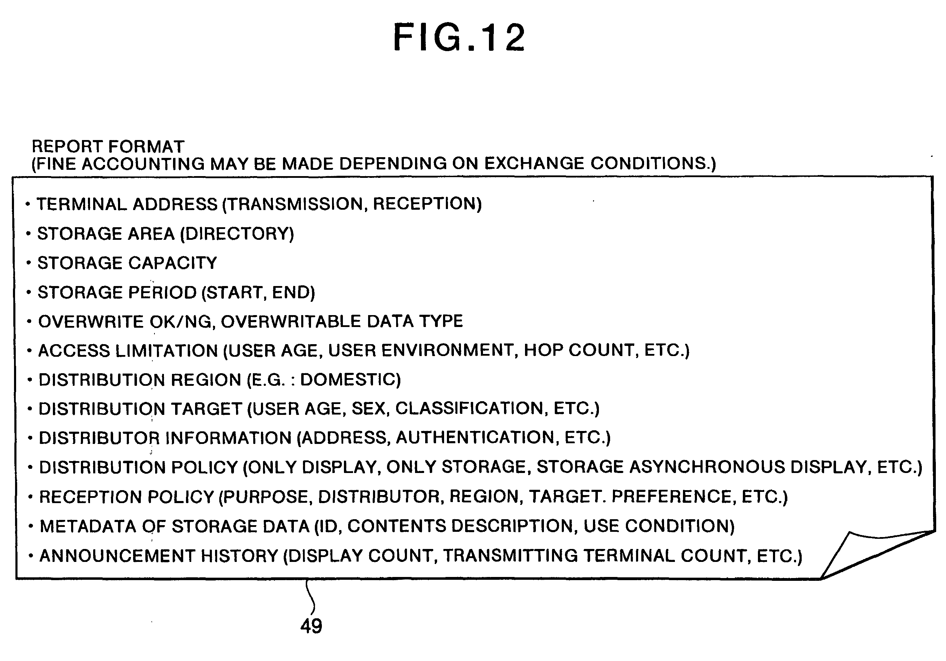

FIG. 12 shows the format of report management data used in the report operation. The report management data 49 has substantially the same data structure as the transmission-reception management data 48 shown in FIG. 10. "Announcement history" in the report management data 49 is data for displaying the number of times advertisement data was displayed in the client terminal 14B and the number of transmitting terminals to which the client terminal is connected.

Advertisement data is distributed attached to contents data by the above described operations, with the result that contents are transmitted and received along with advertisements among users using communication networks such as the Internet to announce products and services, providing commercially great merits.

Although the present invention has been described based on preferred embodiments shown in the drawings, it is obvious to those skilled in the art that the present invention can be easily changed and modified in various ways without departing from the spirit and scope of the present invention. The present invention includes such modifications as well.

## Claims

1. A communication method comprising: network connecting means; data transmitting-receiving means capable of transmitting and receiving data through a network; output means for outputting received data; plural client terminals having storing means for storing the data to be transmitted and received; and a server for managing connection of the client terminals to the network, wherein;
data managed by the server is stored in a free space of the storing means of the registered client terminals; and
when specific data is transmitted and received directly between the client terminals without passing through the server, the client terminals retrieve the management data and attach the retrieved management data to the specific data to be transmitted or received.

2. An advertisement distribution system comprising: network connecting means; data transmitting-receiving means capable of transmitting and receiving data through a network; output means for outputting received data; and plural client terminals having storing means for storing the data to be transmitted and received, wherein the advertisement distribution system:
stores advertisement data and specific data in the storing means of the client terminals; and
has control means, when a request to obtain the specific data is received from a specific client terminal, for attaching the advertisement data to the specific data and transmitting the specific data to the specific client terminal, and when the specific data attached with the advertisement data is received, for outputting the advertisement data to an output device and storing the specific data in the storing means.

3. The advertisement distribution system according to claim 2, wherein the specific data is contents data such as music and image.

4. The advertisement distribution system according to claim 2, including control means for storing the advertisement data as well as the specific data in the storing means.

5. The advertisement distribution system according to claim 2, wherein the specific data and the advertisement data are transmitted and received through electronic mail.

6. The advertisement distribution system according to claim 2, wherein the network is an open network, and on the open network is provided a central server which publicizes the specific data stored in the data supplying client terminals along with address information of the client terminals.

7. The advertisement distribution system according to claim 2, wherein the network is an open network, and over the open network, data supplying client terminals send the specific data stored therein along with address information of the terminals.

8. The advertisement distribution system according to claim 2, wherein transmission and reception of the data is managed by a server, the number of times the data was transmitted in response to a request from the specific client is counted by the server, the counted data is supplied to a sponsor of the advertisement data, and the sponsor pays an advertisement fee to the data supplying clients according to the counted data.

9. The advertisement distribution system according to claim 2, wherein transmission and reception of the data is managed by clients, the number of times the data was transmitted in response to a request from the specific client is counted by the clients, the counted data is supplied to a sponsor of the advertisement data, and the sponsor pays an advertisement fee to the data supplying clients according to the counted data.

10. A medium containing a program for commanding the client terminals to successively perform processing that, when a request to obtain specific data is received from a specific client terminal, attaches advertisement data to the specific data and transmits it to the specific client terminal, and processing that, when the specific data attached with the advertisement data is received, outputs the advertisement data to an output device and stores the specific data in storing means.

11. The medium according to claim 10, wherein advertisement data is outputted to an output device when the specific data attached with the advertisement data is reproduced or used, or asynchronously.

12. The medium according to claim 10, wherein the program is designed to transmit and receive the data by transmitting and receiving electronic mail of the client terminal.

13. A communication method comprising: network connecting means; data transmitting-receiving means capable of transmitting and receiving data through a network; display means for displaying received data; plural client terminals having storing means for storing the data to be transmitted and received; and a server for managing connection of the client terminals to the network, wherein:
data managed by the server is stored in a free space of the storing means of the registered client terminals; and
when specific data is transmitted and received through the server, the server retrieves advertisement data stored in the storing means of the client-terminals and attaches the retrieved advertisement data to the specific data to be transmitted or received.

14. A data transmitting-receiving apparatus comprising: network connecting means; data transmitting-receiving means capable of transmitting and receiving contents data through a network; and data storing means for storing the contents data to be transmitted and received, and further including;
lending means for issuing a request to store advertisement data in a free space of the data storing means to a server having the advertisement data;
merge data creating means for appending the advertisement data to contents data before distributing the contents data; and
control means for controlling the lending of advertisement data and the transmission and reception of contents data, wherein:
advertisement data is stored in a free space of the data storing means; and
when the contents data is transmitted or received, the control means retrieves advertisement data stored in the data storing means, and the merge data creating means appends the retrieved advertisement data to contents data to transmit the contents data.

15. The data transmitting-receiving apparatus according to claim 14, further including exchange condition analyzing means, wherein the control means, when receiving a request to transmit contents data, determines whether a client terminal issuing the request has advertisement data.

16. The data transmitting-receiving apparatus according to claim 14, further including reception report means, wherein the reception report means, when receiving advertisement data along with contents data, reports to the server that the advertisement data was received.

17. A data receiving apparatus comprising: network connecting means; data receiving means capable of receiving contents data through a network; display means for displaying received contents data; data storing means for storing the data to be received; reception report means; and control means for controlling data reception operation, wherein:
the control means, if advertisement data is contained when the contents data is received, reports to a server of the advertisement data that the advertisement data was received.

18. The data receiving apparatus according to claim 17, wherein the data storing means has an advertisement data storage area in addition to a contents data storage area, and if advertisement data is contained when the contents data is received, stores the advertisement data in the advertisement data storage area.
